# EUROPEAN PATENT SPECIFICATION

(11) **EP 3 161 185 B1**
(45) Date of publication and mention of the grant of the patent: **09.05.2018**
(21) Application number: 15735798.9
(22) Date of filing: 20.06.2015
(51) Int. Cl.: C25B 1/26, C25B 9/02, C25B 9/06, C25B 9/20

(54) **NARROW GAP, UNDIVIDED ELECTROLYSIS CELL**
UNGETEILTE ELEKTROLYSEZELLE MIT SCHMALEM SPALT
CELLULE D'ÉLECTROLYSE NON DIVISÉE À ESPACE ÉTROIT

(30) Priority: 24.06.2014 US 201462016647 P
(43) Date of publication of application: 03.05.2017
(73) Proprietor: Chemetics Inc., Vancouver, British Columbia V5M 0A5 (CA)
(72) Inventor: SUMMERS, David, Vancouver, British Columbia V6K 1Z5 (CA); BAILEY, Ian, Vancouver, British Columbia V5M 0A5 (CA)
(74) Representative: Beyer, Andreas
(86) International application number: PCT/US2015/036845
(87) International publication number: WO 2015/200147

(56) References cited:
- EP-A2- 0 248 433
- WO-A2-00/68463
- DE-A1- 3 214 297
- US-A- 3 463 722
- US-A- 3 539 486
- US-A- 4 581 114
- US-A- 4 620 902
- US-A1- 2004 040 838

## Description

### Technical Field

The present invention pertains to undivided cells for energy efficient electrolysis, and particularly to undivided chlorate electrolysis cells.

### Background

Numerous chemicals are prepared on an industrial scale using electrolysis cells to electrolyze a liquor containing suitable reactants and thereby generate various products of electrolysis. In this regard, there are two basic types of electrolysis cells, namely divided cells and undivided cells. In both cell types, certain ions may travel between the electrodes. However, in a divided cell, the cathode and anode sides of the cell are separated (divided) in some manner such that most or all of the reactants and products on each side of the cell are kept separate. On the other hand, in an undivided cell, the cathode and anode sides of the cell are not separated (undivided) and the reactants and products on each side of the cell can mix.

For example, sodium hydroxide, along with hydrogen and chlorine, is typically produced by chlor-alkali electrolysis. The chlor-alkali electrolysis process employs divided electrolysis cells to electrolyze a solution of sodium chloride. Various types of divided cells have been used commercially and include mercury, diaphragm, and membrane cell types. In a mercury cell, liquid mercury provides separation in the cell. During electrolysis, chlorine gas is generated at the anode. Sodium is formed at the mercury cathode and dissolves in the liquid mercury to create an amalgam which is then transported to another chamber where the sodium reacts with water to create sodium hydroxide and hydrogen. In a diaphragm cell, a partially hydraulically permeable diaphragm (typically made of asbestos fibres) provides separation in the cell. A solution of sodium chloride is continually introduced to the anode compartment and flows through the diaphragm to the cathode compartment. During electrolysis, chlorine is again generated at the anode while sodium hydroxide and hydrogen are generated at the cathode. The product sodium hydroxide solution is continually removed from the cathode compartment. The diaphragm prevents the chlorine gas from crossing over to the cathode compartment and the continual flow of solution through the diaphragm prevents the sodium hydroxide from flowing back to the anode compartment, thereby preventing the chlorine and sodium hydroxide from reacting. In a membrane cell, an ion-selective permeable membrane provides separation in the cell. During electrolysis, chlorine is again generated at the anode and positive sodium ions pass through the membrane to the cathode side where sodium hydroxide and hydrogen are generated.

Numerous refinements and improvements have been made to chlor-alkali electrolysis cells over the decades. For instance, US3242059 disclosed diaphragm type electrolysis cells in which the anode-cathode gap could be eliminated except for the thickness of the diaphragm itself and a thin anode supporting member. Also for instance, US4279731 disclosed bipolar electrolyzers comprising a series of divided electrolysis cells of the diaphragm or membrane type. The cells comprised screen or expanded metal electrodes which can be close to or pressed against the dividing diaphragm or membrane. The design provided internal recirculation of the electrolyte and uniform distribution over the electrode surface. And further, an improvement to the electrical connection of the electrodes in each bipolar element through a bipolar separator was provided.

In another example, sodium chlorate is typically produced by a chlorate electrolysis process which also involves electrolyzing a solution of sodium chloride but uses undivided electrolysis cells. (Sodium chlorate is primarily produced as a precursor for the subsequent production of chlorine dioxide. Since chlorine dioxide is relatively unstable and is difficult to transport and store, it is usually produced only as needed onsite.) The chlorate process however involves a complicated set of both electrochemical and chemical reactions and tight control of various operating parameters including pH, temperature, composition and concentration of electrolyte is required. As in the chlor-alkali process, chlorine gas is produced at the anode and hydrogen and hydroxyl ions are produced at the cathode during electrolysis. However, in the chlorate process, the produced chlorine is immediately reacted chemically with the hydroxyl ions present in the cell liquor so as to primarily produce hypochlorite which in conjunction with the sodium ions present in the solution produces sodium hypochlorite. The hypochlorite is an intermediate in the process and is subsequently converted to chlorate via chemical reactions with other species in the electrolyte liquor. Usually this conversion is accomplished in a chemical reactor operating at elevated temperature and located downstream of the chlorate electrolyzer. A thorough review of sodium chlorate electrolysis can be found for instance in "Electrolytic Sodium Chlorate Technology: Current Status", B.V. Tilak, ECS Proceedings Vol. 99-21, Page 8, Chlor-alkali and Chlorate Technology: R. B. Macmullin Memorial Symposium.

In the chlorate electrolysis process, it is intended that various species in the cell liquor readily react chemically with each other and thus undivided electrolysis cells are employed here. Numerous refinements and improvements have also been made to such undivided electrolysis cells over the years. In particular, it has been highly desirable to improve the energy efficiency of chlorate electrolyzers and thus reduce the power consumption and operating cost required for production. Despite all the advances in design and in complex controls introduced to date, there are still several sources of resistive losses in present day chlorate electrolyzers that undesirably affect energy efficiency.

Resistive losses arise in the numerous electrical connections appearing between the various metal components in the electrolyzer. Where possible, it is thus desirable to reduce the path length that current is required to travel. Bipolar electrolyzer constructions can therefore be preferred. Further, losses arise due to electrolyte resistance and this resistance generally increases with the path length or gap between the anode and cathode electrodes. Thus, the minimum gap possible between anodes and cathodes would seem preferred. However, during operation, hydrogen gas is continually generated at the cathode at a rate which is a function of the electrolysis current. This generated hydrogen displaces electrolyte between the cell electrodes and increases the effective resistance of the electrolyte remaining between the electrodes (known as "hydrogen blinding"). The volume of hydrogen generated, and hence the volume of displaced electrolyte, is essentially independent of the gap between anodes and cathodes. Thus for narrow gap cells, any improvement in resistive losses resulting from reducing the gap between anodes and cathodes is at least partially offset by the adverse effect of hydrogen blinding. At some point, any further reduction in gap actually increases the resistance between the electrodes while in operation. A trade-off is thus required and conventional chlorate electrolysis cells typically have a significant non-zero gap between the anodes and cathodes where the losses due to the combined effects of gap and hydrogen displacement have been minimized.

There is a continuing desire to improve the energy efficiency of electrolyzers in general for the industrial production of chemicals. And specifically, there is a desire to improve the energy efficiency of electrolyzers comprising undivided electrolysis cells for the production of sodium chlorate and other related chemicals. This invention addresses that desire and provides other advantages as discussed below.

### Summary

The present invention provides new designs for and methods for operating an undivided electrolysis cell to improve energy efficiency in the electrolyzing of a liquor. The cells are characterized by a narrow gap between the electrodes and the porous design employed (for both electrodes and for an insulating separator between them) allows for generated gas to be removed without "blinding" the electrodes.

Specifically, the undivided electrolysis cell comprises a porous anode, a porous cathode, and an electrically insulating separator therebetween which are all permeable to the liquor. In addition, the electrolysis cell comprises an anode compartment whose surface comprises the porous anode and an anode current carrier electrically connected to the porous anode, and a cathode compartment whose surface comprises the porous cathode and a cathode current carrier electrically connected to the porous cathode. Further, there is an inlet for the liquor at the bottom of the cell, and an outlet for the liquor and any gas product at the top of the cell. The liquor inlet may be provided in either of the anode or cathode compartments while the liquor outlet is then provided in the other of these two compartments. Herein, the inlet compartment refers to whichever of these two compartments comprises the inlet, and the outlet compartment refers to whichever of the two compartments comprises the outlet. In a preferred embodiment, the inlet compartment is the anode compartment and the outlet compartment is the cathode compartment.

Electrolysis cells of the invention are particularly suitable for chlorate electrolysis in which the primary components in the liquor to be electrolyzed are NaCl and water. Typically however, the liquor is recirculated and thus can also comprise a certain amount of the products of electrolysis and also products of subsequent chemical reaction (e.g. sodium hypochlorite, sodium chlorate, dissolved chlorine and hydrogen gases). Further, as is known in the art, additives may also be included in the liquor to enhance chlorate formation (e.g. sodium dichromate).

The porous anode in the electrolysis cell can conveniently be made of expanded metal or louvered metal which has an appropriate coating. And a conventional preferred metal can be employed for the anode, e.g. titanium. In a like manner, the porous cathode can also be made of an expanded metal or louvered metal. And here too, a conventional preferred metal can be employed for the cathode, e.g. a nickel-free stainless or mild steel.

The electrically insulating separator in the electrolysis cell can be of various constructions as long as it is suitably porous to the liquor and provides adequate electrical insulation between the electrodes. For instance, the electrically insulating separator can be a porous polymer sheet, a set of polymer buttons, or merely a suitable gap. In particular, a suitable electrically insulating separator for achieving a very narrow gap is a porous fluoropolymer sheet. Alternatively similar embodiments made of ceramic may be employed as the electrically insulating separator.

As mentioned, the energy efficiency of such an electrolysis cell can be improved. In part, this is because a narrower gap can be employed between the electrodes than the gap employed in conventional undivided electrolysis cells. For instance, the distance between the anode and the cathode can be less than about 2 mm.

In an exemplary embodiment, the cell components can be selected such that the flow resistance of at least one of the separator and the cathode is greater than the flow resistance of the anode. This results in an increase in the pressure difference across the electrodes which can be beneficial for preventing backflow of hydrogen from the cathode compartment into the electrochemically active area of the cell.

In certain embodiments, both the anode current carrier and/or the cathode current carrier can be pan shaped and comprise a set of formed features. Also in certain embodiments, the porous anode and porous cathode can be electrically connected to the anode and cathode current carriers respectively by appropriate sets of electrically conductive fingers.

The present invention also includes electrolyzers comprising a plurality of the aforementioned electrolysis cells in a bipolar arrangement. In embodiments in which the anode and cathode current carriers are both pan shaped and comprise a set of formed features, the features can be configured such that the set of features in the anode current carriers nest with the set of features in adjacent cathode current carriers in the bipolar arrangement. Advantageously, the electrolysis cells can be made as modules. The electrolyzer can thus be modular and individual cells may thus be readily removed and exchanged as desired.

In such electrolyzers, it may be advantageous (e.g. for purposes of gas removal) to stack the electrolysis cells such that the anodes and cathodes in the cells are oriented at an angle greater than zero with the vertical (e.g. perpendicular to the vertical).

The electrolysis cells of the invention are for the undivided electrolysis of a liquor. The method of operating such cells comprises directing the liquor to the liquor inlet in the inlet compartment and into the inlet compartment. The liquor is then directed in a direction through the porous anode, through the electrically insulating separator, and through the porous cathode. Depending on the locations of the liquor inlet and liquor outlet, the direction can be from anode to cathode or from cathode to anode. An electrolysis voltage and current is applied across the anode and cathode current carriers during the directing of the liquor, thereby electrolyzing the liquor and then the liquor and gas product are directed out from the liquor outlet in the outlet compartment. In a preferred embodiment, the liquor inlet and liquor outlet are located in the anode and cathode compartments respectively, and thus the liquor is directed from anode to cathode inside the cell. In order to direct the liquor appropriately throughout the cell, the electrolysis cell may comprise no other inlet in either the anode or the cathode compartments and no outlet in the anode compartment. Alternatively however, the electrolysis cell may comprise a suitable drain in the cathode compartment and/or a vent in the anode compartment. Further, the cathode compartment may advantageously comprise features for directing gas product upwards towards the gas product outlet.

In a typical embodiment for chlorate electrolysis, the operating method also comprises recirculating the liquor from the liquor outlet in the cathode compartment to the liquor inlet in the anode compartment.

### Brief Description of the Drawings

Figure 1a shows a schematic of a cell unit for a bipolar chlorate electrolyzer in the prior art. The cell unit comprises a number of undivided monopolar chlorate electrolysis cells.
Figure 1b illustrates the primary reactions and the hydrogen gas product generated in the electrolysis cells of Figure 1a.
Figure 2a shows a schematic of a chlorate electrolysis cell of the invention.
Figure 2b illustrates the primary reactions and the hydrogen gas product generated in the electrolysis cell of Figure 2a.
Figure 3 shows a schematic of a bipolar electrolyzer comprising a series stack of the inventive chlorate electrolysis cells of Figure 2a in which the anodes and cathodes in the cells are oriented vertically.
Figure 4 shows a schematic of the bipolar electrolyzer of Figure 3 in which the anodes and cathodes in the cells are oriented perpendicular to the vertical.
Figure 5 shows a schematic of a chlorate production system comprising a chlorate electrolyzer of the invention.
Figure 6 plots the polarization results obtained for the inventive and comparative electrolysis cells of the Examples.

### Detailed Description

Unless the context requires otherwise, throughout this specification and claims, the words "comprise", "comprising" and the like are to be construed in an open, inclusive sense. The words "a", "an", and the like are to be considered as meaning at least one and not limited to just one.

In addition, the following definitions are intended. In a numerical context, the word "about" is to be construed as meaning plus or minus 10%.

As mentioned before, an electrolysis cell may either be a divided type or an undivided type of cell. In both, certain ions may travel between the electrodes. A divided cell however is one in which the cathode and anode sides of the cell are separated (divided) in some manner such that most or all of the reactants and products on each side of the cell are kept separate. An undivided cell is one in which the cathode and anode sides of the cell are not separated (undivided) and the reactants and products on each side of the cell can mix.

Herein, the term "electrically insulating separator" is used in the context of an undivided electrolysis cell and refers to any of the various materials, components, or means for providing electrical separation between the anode and cathode electrodes. It thus can include porous sheet materials, spacers such as buttons, or simply a gap (i.e. a space) between the electrodes.

The term "louvered" is used in the context of the porous cell electrodes and refers to an electrode comprising a series of angled openings (thereby rendering the electrode porous) which are typically spaced at regular intervals (e.g. suggestive of window blinds).

The present invention relates to improved designs and methods for operating undivided electrolysis cells in order to obtain better energy efficiency. It is particularly suitable for use in chlorate electrolysis.

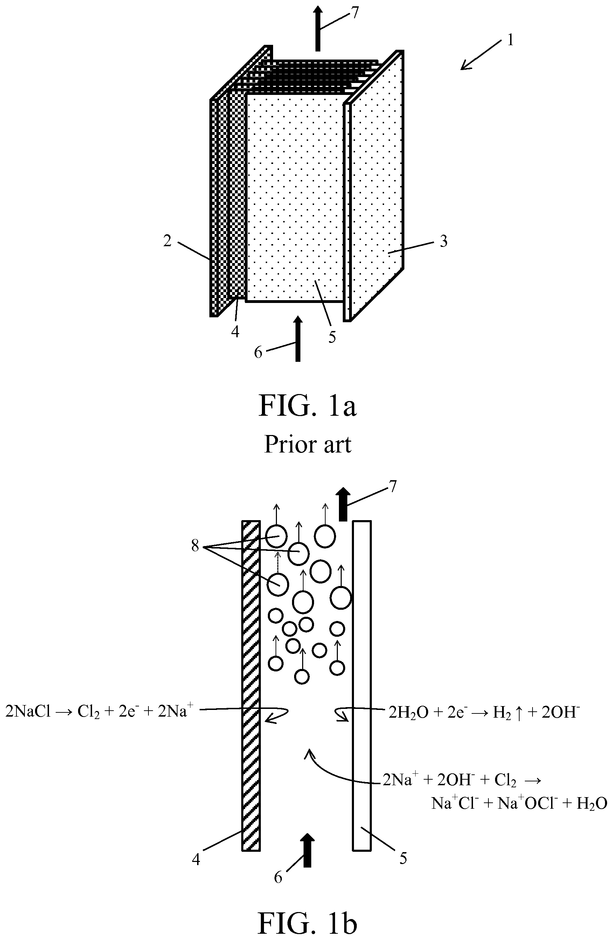

A schematic of a cell unit for an exemplary bipolar chlorate electrolyzer in the prior art is shown in Figure 1a. Cell unit 1 comprises anode carrier plate 2 and cathode carrier plate 3. A plurality of solid anode plates 4 are mounted perpendicularly to a side of anode carrier plate 2. In a like manner, a plurality of solid cathode plates 5 are mounted perpendicularly to a side of cathode carrier plate 3. These assemblies are then configured as shown such that anode plates 4 interleave with cathode plates 5. Each adjacent pair of anode plate 4 and cathode plate 5 forms an electrolysis cell. The desired gap between each anode and cathode plate is obtained by mounting plates 4, 5 with an appropriate spacing to their respective carrier plates 2, 3.

A bipolar electrolyzer is then made by combining two or more cell units 1 in a series stack, i.e. the flat side of anode carrier plate 2 from one cell unit is attached to the flat side of cathode carrier plate 3 from a second cell unit. (Typically, the carrier plates are welded together, for instance by explosive bonding because dissimilar metals are used for each polarity.) This kind of bipolar arrangement is known in the art as a multi-monopolar configuration.

The liquor for chlorate electrolysis primarily contains sodium chloride in aqueous solution. However, the liquor is usually recirculated and thus comprises a certain amount of the products of electrolysis and also products of subsequent chemical reaction (e.g. sodium hypochlorite, sodium chlorate, chlorine and hydrogen gases). Further, certain additives (e.g. sodium dichromate) are also usually included to enhance chlorate formation. In operation, this liquor is supplied at the bottom of the numerous electrolysis cells (indicated by arrow 6 in Figure 1a) and flows upwardly between the anode and cathode plates 4, 5. Electrolysis takes place along with certain chemical reactions as the liquor travels between anode and cathode plates 4, 5. The collected liquor comprising the products of the electrolysis and these chemical reactions is removed at the top of the electrolysis cells (indicated by arrow 7 in Figure 1b).

Figure 1b illustrates the primary electrochemical and chemical reactions occurring in the chlorate electrolysis process. At anode plate 4, electrochemical reaction 1) occurs:
1)

   2NaCl → Cl₂ + 2e⁻ + 2Na⁺

At cathode plate 5, electrochemical reaction 2) occurs:
2)

   2H₂O + 2e⁻ → H₂↑ + 2OH⁻

Because the electrolysis products and liquor are not kept apart or divided, while the liquor travels between the cell electrodes, the chlorine produced by electrolysis reacts quickly with components in the liquor according to chemical reaction 3):
3)

   2Na⁺ + 2OH⁻ +Cl₂ → Na⁺Cl⁻ + Na⁺OCl⁻ + H₂O

As illustrated in Figure 1b, the hydrogen gas produced according to reaction 2) forms bubbles 8 and displaces the liquor electrolyte between anode plate 4 and cathode plate 5. Hydrogen 8 and collected liquor are then removed from the top of the electrolysis cell (arrow 7). The NaOCl produced according to reaction 3) is converted to sodium chlorate in a chemical reactor at elevated temperature at a later stage in the production process. The overall reaction 4) in a chlorate production system is thus:
4)

   NaCl + 3H₂O → NaClO₃ + 3H₂↑

To a certain extent, hydrogen bubbles 8 interfere with the electrolysis process by increasing the effective resistance of the liquor electrolyte between the electrodes and/or by "gas blinding" (wherein access to the cathode surface is blocked). Thus, the gap between anode plate 4 and cathode plate 5 cannot be made too small without experiencing a substantial negative effect due to these effects.

In a chlorate electrolysis cell of the invention however, the generated hydrogen gas is quickly removed from between the anode and cathode electrodes and out of the electrolysis region. Any increase in electrolyte resistance and gas blinding is significantly reduced and the electrodes can be brought much closer together, thereby reducing the liquor electrolyte resistance between the electrodes and increasing energy efficiency. In order to further reduce any negative effects arising from the presence of hydrogen bubbles between the electrodes, it can be beneficial to increase the pressure drop across the electrolysis cell which in turn can advantageously prevent back migration of hydrogen into the spaces between the electrodes. Such an increased pressure drop can be engineered into the electrolysis cell generally by selecting the cell components such that the flow resistance of at least one of the separator and the cathode is greater than the flow resistance of the anode. As will be readily apparent to those in the art, this can be achieved for instance via appropriate modifications to the relative pore characteristics in these various components.

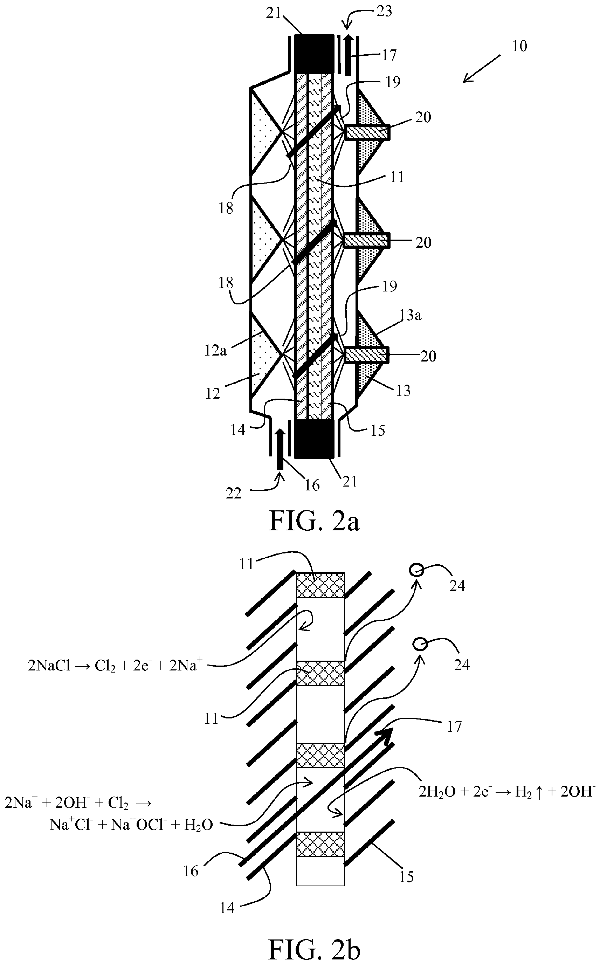

An improved chlorate electrolysis cell of the invention is shown in the schematic of Figure 2a. Electrolysis cell 10 comprises porous anode 14 and porous cathode 15 separated by porous and electrically insulating separator 11. Porous anode 14 is electrically connected to anode pan 12 by several sets 18 of electrically conductive fingers. Anode pan 12 serves as an anode current carrier for the cell. In a like manner, porous cathode 15 is electrically connected to cathode pan 13 by several sets 19 of electrically conductive fingers and posts 20. Cathode pan 13 serves as a cathode current carrier for the cell.

Further, electrolysis cell 10 comprises seals 21 at both top and bottom which seal to anode pan 12, anode 14, cathode 15, and cathode pan 13. The sealed anode 14 and anode pan 12 thus form the surface of an anode compartment for the chlorate liquor. In a like manner, the sealed cathode 15 and cathode pan 13 form the surface of a cathode compartment for the chlorate liquor. In the embodiment shown in Figure 2a, the anode compartment comprises liquor inlet 22, while the cathode compartment comprises liquor and hydrogen gas outlet 23. (In actual embodiments, a distributor may also be employed to distribute the liquor at the inlet, but is not shown in Figure 2a. Further, it should be noted that, in principle, the liquor inlet and liquor outlet may instead be located in the opposite compartments, namely the cathode and anode compartments respectively. While such an arrangement may not be optimal in most applications, it nonetheless is expected to be functional and can be contemplated.) The cathode compartment may optionally contain features (not shown in Figure 2a) which assist in directing hydrogen gas product upwards towards the hydrogen gas outlet 23. Such features may include shaped baffles and the like for this purpose.

In electrolysis cell 10, the liquor is forced through porous anode 14 and then porous cathode 15 instead of travelling upwards between anode plate 4 and cathode plate 5 as in the prior art cell of Figure 1b. Here, liquor is supplied (indicated by arrow 16) to liquor inlet 22, enters the anode compartment, is forced through porous anode 14, through porous separator 11, through porous cathode 15, and into the cathode compartment. The collected liquor and hydrogen gas are then directed out (indicated by arrow 17) from outlet 23. In order to ensure that the liquor is completely directed through porous anode 14 and porous cathode 15, electrolysis cell 10 may comprise no substantial outlet in the anode compartment and no other inlet in either the anode or cathode compartment (although a small bleed outlet may typically be provided to discharge hydrogen collecting at the top at the anode compartment).

Both anode 14 and cathode 15 are desirably quite permeable to the liquor. As mentioned previously however, it may be advantageous for the former to be more permeable than the latter to introduce a desirable pressure drop in the cell. While various design options are available, use of expanded metals for either or both of these electrodes is a convenient choice. Alternatively, and as more clearly shown for both anode 14 and cathode 15 in Figure 2b, louvered metal electrodes may be employed. The louvered metal/s can have a plurality of angled openings or slots to assist in guiding the liquor and generated hydrogen gas upwards, through, and out of the electrolysis region. Many other design options are possible though for either or both electrodes including plates in which numerous holes have been drilled, sheets made of sintered metal fibres, etc. In chlorate electrolysis, the anode and other anode hardware is typically made of a coated titanium and the cathode and other cathode hardware is typically made of nickel-free stainless steel or a type of mild steel.

Porous, electrically insulating separator 11 is also desirably quite permeable to the liquor. Further, it should be compatible with the chemical reactants and products. And any means for achieving a reliable, insulating separation may be employed. For instance, separator 11 can simply be a gap between the electrodes. However, to obtain narrow gaps while still maintaining reliable electrical separation between the electrodes, it is generally desirable to employ some porous, electrically insulating spacing material. For instance, a number of polymer buttons may be used to space anode 14 and cathode 15 apart. Or, in one desirable embodiment, a porous polymer sheet is used because such sheets can be made quite thin yet robust and allow for distances between the anode and cathode of less than about 2 mm (a typical minimum in conventional chlorate electrolysis cells relying on a gap). A variety of fluoropolymers can be used as suitable materials for separator 11 because they are capable of withstanding the corrosive, demanding environment in the electrolyzer. Alternatively, certain ceramics can be used as suitable materials for separator 11. Materials may have hydrophobic surface properties. Alternatively, hydrophilic materials may further improve performance by reducing hydrogen disengagement.

In Figure 2a, the main current carriers for the electrolysis current are anode pan 12 and cathode pan 13. Current is distributed to anode 14 from anode pan 12 via set 18 of electrically conductive fingers. And current is directed from cathode 15 to cathode pan 13 via set 19 of electrically conductive fingers and connecting posts 20. Again, this anode and cathode hardware is typically made of a coated titanium and nickel-free stainless steel or mild steel respectively.

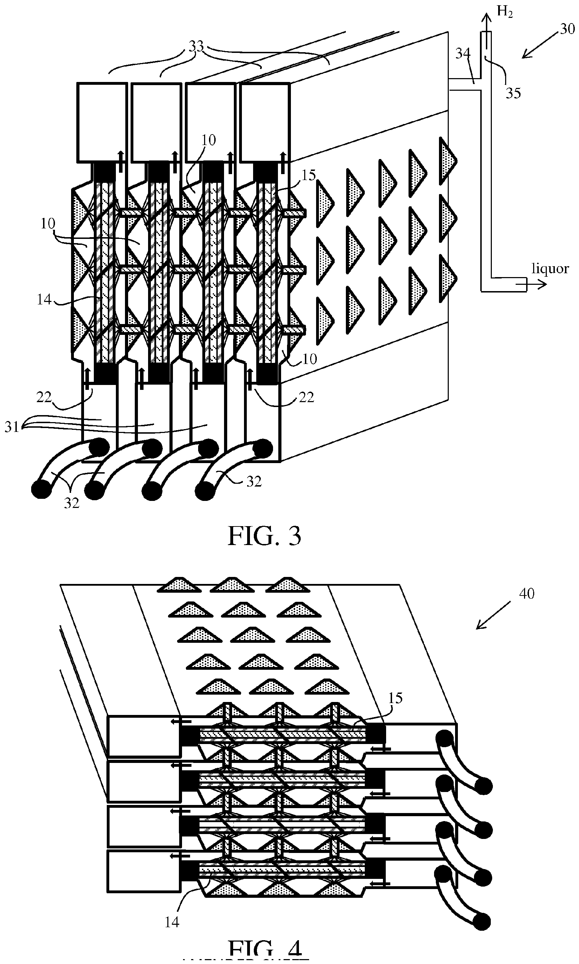

Anode pan 12 and cathode pan 13 can comprise sets of complementary features which have been formed therein for purposes of providing structural strength and of locating and electrically connecting cells during assembly into a multi-cell bipolar electrolyzer. In Figure 2a, anode pan 12 and cathode pan 13 comprise complementary sets of cone shaped features, namely 12a and 13a respectively, which have been formed therein for this purpose. (Exemplary bipolar electrolyzers made with such cells appear later in Figures 3 and 4.)

Figure 2b illustrates the primary reactions and the hydrogen gas product generated in the electrolysis cell of Figure 2a. The same electrochemical and chemical reactions occur here as those in Figure 1a. Here however, the supplied liquor (indicated by arrow 16) flows through porous anode 14, separator 11, and porous cathode 15. Electrolysis takes place during this transit and collected liquor and hydrogen gas product 24 are removed as indicated by arrow 17. Unlike in the cell of Figure 1b, the generated hydrogen bubbles 24 are quickly carried out with the liquor from the region between anode 14 and cathode 15 and into the cathode compartment. Gas blinding is thus substantially reduced. Note that the chemical reaction of generated chlorine with components in the liquor can take place within separator 11, porous cathode 15, and/or in the cathode compartment.

Operation of the chlorate electrolysis cells of Figures 2a and 2b is generally similar to that of conventional chlorate electrolysis cells. For instance, the reactants, concentrations, temperatures and pressures can all be the same or similar. Again though, as mentioned previously, it may be advantageous to provide for an increased pressure drop across the cell in order to prevent backflow of hydrogen from the cathode compartment into the electrochemically active area of the cell.

Electrolysis cells of the type shown in Figure 2a can be readily used to construct electrolyzers with a bipolar configuration. Figure 3 shows a schematic of such a bipolar electrolyzer which comprises a stack of four chlorate electrolysis cells 10 of Figure 2a in series.

In bipolar electrolyzer 30, four chlorate electrolysis cells 10 are stacked such that the anodes 14 and cathodes 15 in the cells therein are oriented vertically. Additionally, electrolysis cells 10 are stacked such that complementary features 12a in anode pans 12 nest with features 13a in adjacent cathode pans 13 and thereby ensure that the cells are located well with respect to each other and are well connected electrically. An advantage of the invention is that the electrolysis cells can be made as modules and thus may be readily removed and exchanged as desired.

In the embodiment shown in Figure 3, bipolar electrolyzer 30 comprises a series of liquor feed headers 31 (one for each electrolysis cell 10) which distribute liquor to liquor inlets 22 in individual electrolysis cells 10. Feed headers 31 are fed with liquor by a series of liquor feed tubes 32. Bipolar electrolyzer 30 also comprises a series of collector/degassifier headers 33 (again, one for each electrolysis cell 10) which serve as headers to collect liquor and hydrogen gas from outlets 23 from individual electrolysis cells 10. The collected liquor comprising hypochlorite and other dissolved products of electrolysis is removed from electrolyzer 30 via outlet tube 34. The collected hydrogen gas is then separated off from outlet tube 34 via branch tube 35. If desired, electrolyzer 30 may also comprise a suitable drain in the cathode compartment and/or a vent in the anode compartment.

A different exemplary orientation for the cells in a bipolar electrolyzer of the invention is shown in Figure 4. Therein, bipolar electrolyzer 40 is oriented such that anodes 14 and cathodes 15 in the cells are oriented perpendicular to the vertical. Specifically, electrolyzer 40 is oriented such that cathodes 15 are above anodes 14 in the individual electrolysis cells. Depending on the components used in the cells and other details of construction, this orientation may improve the removal of hydrogen gas by-product.

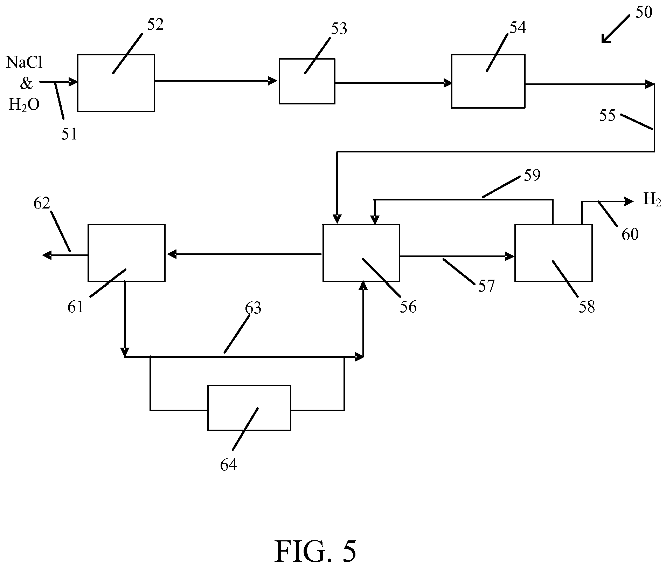

Electrolyzers of the type shown in Figures 3 and 4 may then be employed to obtain improved efficiency in otherwise conventional chlorate production systems. In that regard, Figure 5 shows a schematic of a merchant chlorate production system comprising a chlorate electrolyzer of the invention.

Merchant chlorate production system 50 is relatively complex and in sequence comprises salt and water feed 51, brine saturator 52, guard filter 53, ion exchange subsystem 54, brine line 55, chlorate reactor 56, liquor inlet line 57, chlorate electrolyzer 58 of the invention, collected liquor outlet line 59, chlorate crystallization subsystem 61 and line 62 which are interconnected as shown. Brine for electrolysis is prepared in brine saturator 52. A suitable source of salt (e.g. evaporated salt) and a supply of demineralised water is provided at salt and water feed 51. From there, brine is directed via brine line 55 to guard filter 53, then to ion exchange subsystem 54 and finally to chlorate reactor 56 where it is mixed with the product from chlorate electrolyzer 58 to maintain the salt content in the electrolyzer feed. Chlorate reactor 56 directs an electrolyte solution for electrolysis comprising both chlorate and brine to chlorate electrolyzer 58 via liquor inlet line 57. And electrolyzed chlorate solution from chlorate electrolyzer 58 is directed back to chlorate reactor 56 via collected liquor outlet line 59. The hydrogen gas produced is removed via line 60.

Concentrated product chlorate solution from chlorate reactor 56 is directed to chlorate crystallization subsystem 61 where chlorate product is crystallized out from the more concentrated chlorate solution and removed at 62. The leftover solution after crystallizing is recirculated back to chlorate reactor 56 via recirculation line 63. Over time, impurities can accumulate in recirculation line 56. These impurities may be removed in a variety of ways. For instance, chlorate electrolysis system 50 in Figure 5 includes side stream subsystem 64 connected in parallel to recirculation line 63. The configuration of components within side stream subsystem 64 and their operation are fully described in WO2014/029021.

Electrolyzers of the invention may also be employed in chlorate production systems or subsystems other than merchant chlorate production systems like that shown in Figure 5. For instance, a chlorate electrolyzer of the invention may desirably be employed in a chlorate production subsystem which forms part of an integrated chlorine dioxide production system. An exemplary such system is the Chemetics integrated chlorine dioxide system which consists of three plant areas to produce the two intermediate products, sodium chlorate (NaClO3) and hydrochloric acid (HCl), and the final product, chlorine dioxide (ClO2). In such a system, sodium chlorate can desirably be produced by electrolysis of a sodium chloride solution using an electrolyzer of the invention to make strong sodium chlorate liquor. The salt for this reaction is a recycled by-product from the chlorine dioxide production area. Hydrogen gas is co-produced with the sodium chlorate, and is used as a feedstock for hydrochloric acid production. Hydrochloric acid is produced by burning chlorine gas and hydrogen gas. The hydrogen gas comes from the sodium chlorate electrolysis area. Make-up chlorine gas comes from the plant battery limits. Weak chlorine gas, a recycled by-product of the chlorine dioxide generation area, is combined with this chlorine make-up stream prior to being burned with the hydrogen gas. Chlorine dioxide gas is produced, along with chlorine gas and sodium chloride (salt), by combining strong chlorate liquor and hydrochloric acid in the chlorine dioxide generator. The chlorine dioxide gas is absorbed in chilled water and then stripped with air to remove residual chlorine, to produce a high-purity chlorine dioxide solution for commercial use; typically in an ECF pulp mill bleach plant. The liquor leaving the generator contains unreacted sodium chlorate and the by-product salt. This solution, called weak chlorate liquor, is recycled back to the sodium chlorate electrolysis area for reconcentration. The chlorine by-product (weak chlorine), which is not absorbed, is recycled for hydrochloric acid production. Present Chemetics integrated chlorine dioxide systems are described in more detail in, for instance, "Adopting the Integrated Chlorine Dioxide Process for Pulp Bleaching to Comply with CREP Regulations"; A. Barr et al., IPPTA, J. Vol. 21, No. 1, Jan-March, 2009 121-127.

The method of the invention is particularly suitable for use in chlorate electrolysis. However, any process involving undivided electrolysis may benefit from the designs and methods of the invention, e.g. hypochlorite production, perchlorate production, potassium permanganate production. Further, use of the invention can provide greater flexibility in the design and/or configuration of the electrolyzers employed. For instance, conventional chlorate electrolyzers have practical limits on cell height arising from the amount of generated hydrogen gas. However, such limitations may not apply to electrolyzers of the invention, and thus higher cells may be considered in practical embodiments.

The following Examples have been included to illustrate certain aspects of the invention but should not be construed as limiting in any way.

### Examples

Laboratory type chlorate electrolysis cells were made and operated to compare the characteristics of a cell of the invention to those of a conventional cell.

An inventive electrolysis cell was made comprising a pan-shaped anode compartment and a pan-shaped cathode compartment. Both compartments were made of grade 2 titanium and had dimensions of about 38 cm in width, 23 cm in height and 2.2 cm in depth. A cell assembly comprising a porous anode, a porous cathode, and an electrically insulating separator therebetween was sandwiched together between the lips of the pan-shaped anode and cathode compartments. The lips of the anode and cathode compartments directly contacted the edges of the anode and cathode respectively and thus were electrically connected thereto to serve as anode and cathode current carriers respectively. The separator extended slightly beyond the edges of the anode and cathode. The electrolysis cell was sealed by bolting together suitably shaped gaskets between the extended separator edge and the lips of the anode and cathode compartments.

Both the anode and cathode employed substrates which were made of expanded titanium mesh (approximately 1 mm thick, with diamond shaped openings in which the diamond dimensions were about 3 mm by 1.5 mm, and an open area ∼ 50%) thus rendering both anode and cathode permeable to cell liquor. Prior to assembly, both substrates were treated by sandblasting and an acid etching process, and then coated with catalyst comprising mixed metal oxides (mainly RuO₂, IrO₂, and TiO₂).

An expanded PTFE mesh was used as the cell separator, thus rendering the separator permeable to cell liquor. The PTFE mesh was about 0.95 mm thick and had diamond shaped openings whose dimensions were about ½ the size of those of the anode and cathode substrates. In addition however, to improve flow and performance, additional larger openings were cut out from the separator. Specifically, nine evenly-spaced rectangular openings (about 32 mm by 83 mm in size) were cut out from the separator surface.

The active surface of the cell assembly (i.e. the surface within the seal of the electrolysis cell) had dimensions of about 10 cm by 25 cm. The electrolysis cell was oriented vertically and had three liquor inlets at the bottom of the anode compartment, and three liquor and gas product outlets at the top of the cathode compartment. These liquor inlets and outlets were evenly spaced and about 13 mm in diameter. Liquor distributors were employed within each of the anode and cathode compartments to achieve a more even flow of cell liquor into and out from the electrolysis cell. The anode and cathode distributors were located in the compartments immediately adjacent the liquor inlets and outlets respectively. Both distributors were about 16 mm x 22 mm x 25 cm in size and each comprised 8 evenly spaced distribution holes about 6 mm in diameter.

A comparative electrolysis cell was constructed in a similar manner to a conventional chlorate electrolysis cell (e.g. to operate as represented by Figure 1b) and which had been optimized for commercial use. Here, the anode employed a substrate comprising solid titanium plate (approximately 2 mm thick) which had been prepared and coated with mixed oxide catalyst in a similar manner to the preceding inventive cell. The cathode was a solid steel plate (approximately 3 mm thick) with no catalyst coating. The anode and cathode were separated via use of a gasket at the periphery with a gap of about 2mm between anode and cathode. The comparative electrolysis cell had a liquor inlet accessing the bottom of the gap between anode and cathode, and a liquor outlet at the top of the gap.

The electrolyte used for test purposes was a convention chlorate solution having a composition of NaClO₃/NaCl/Na₂Cr₂O₇ in concentrations of 450/110/5 gpl. In the inventive electrolysis cell, electrolyte flowed in the liquor inlets at the bottom of the anode compartment, through the liquor distributor therein, through the porous anode, the porous separator, and the porous cathode, and then out through the liquor distributor in the cathode compartment, and finally out the top of the cathode compartment. In the comparative cell, electrolyte flowed in from the liquor inlet at the cell bottom, through the gap between anode and cathode, and then out the liquor outlet at the cell top. The cells were initially conditioned for 4.5 days by operating at a current density of 3 kA/m² (based on active area of electrodes), a pH of 6, and a temperature of 80 °C. Thereafter, the temperature of the electrolyte was raised to 90 °C and polarization results (i.e. voltage versus current density) were obtained for each cell over a range of current densities from 0.5 to 5 kA/m². The electrolyte flow rate used was about 100 l/h.

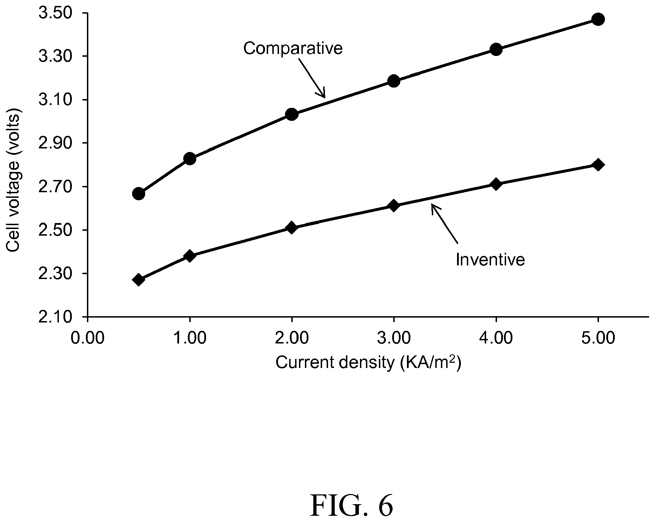

Figure 6 plots the polarization results obtained for the inventive and comparative electrolysis cells. The cell voltage of the inventive electrolysis cell is markedly better than that of the conventional electrolysis cell over the full range of current densities tested and is, for instance, about 620 mV lower at 4 kA/m².

While particular elements, embodiments and applications of the present invention have been shown and described, it will be understood, of course, that the invention is not limited thereto since modifications may be made by those skilled in the art without departing from the scope of the present disclosure, particularly in light of the foregoing teachings. Such modifications are to be considered within the purview and scope of the claims appended hereto.

## Claims

1. An undivided electrolysis cell for electrolyzing a liquor comprising:
a porous anode permeable to the liquor;
a porous cathode permeable to the liquor;
an electrically insulating separation between the anode and cathode and permeable to the liquor and to the products of the electrolyzed liquor;
an anode compartment whose surface comprises the porous anode and an anode current carrier electrically connected to the porous anode;
a cathode compartment whose surface comprises the porous cathode and a cathode current carrier electrically connected to the porous cathode;
a liquor inlet at the bottom of the electrolysis cell in an inlet compartment wherein the inlet compartment is one of the anode compartment and the cathode compartment; and
a liquor and gas product outlet at the top of the electrolysis cell in an outlet compartment wherein the outlet compartment is that one of the anode compartment and the cathode compartment other than the inlet compartment.

2. The electrolysis cell of claim 1 wherein the inlet compartment is the anode compartment and the outlet compartment is the cathode compartment,
and/or wherein the electrolysis cell is a chlorate electrolysis cell and the liquor comprises NaCI and water.

3. The electrolysis cell of claim 1 wherein the porous anode is made of expanded metal or louvered metal, preferably titanium.

4. The electrolysis cell of claim 1 wherein the porous cathode is made of expanded metal or louvered metal, preferably a nickel-free stainless or mild steel.

5. The electrolysis cell of claim 1 wherein the electrically insulating separation is selected from the group consisting of polymer buttons, a gap, and porous polymer sheet, the latter preferably comprising a porous fluoropolymer sheet.

6. The electrolysis cell of claim 1 wherein the distance between the anode and the cathode is less than about 2 mm.

7. The electrolysis cell of claim 1 wherein the flow resistance of at least one of the separation and the cathode is greater than the flow resistance of the anode.

8. The electrolysis cell of claim 1 wherein the anode current carrier is pan shaped and comprises a set of formed features,
and/or wherein the cathode current carrier is pan shaped and comprises a set of formed features.

9. The electrolysis cell of claim 1 wherein the porous anode is electrically connected to the anode current carrier by a set of electrically conductive fingers,
and/or wherein the porous cathode is electrically connected to the cathode current carrier by a set of electrically conductive fingers.

10. The electrolysis cell of claim 1 wherein the cathode compartment comprises features for directing gas product upwards towards the gas product outlet.

11. The electrolysis cell of claim 1 comprising no other inlet in either the anode or the cathode compartments and no outlet in the anode compartment.

12. The electrolysis cell of claim 1 comprising a vent in the anode compartment, and/or comprising a drain in the cathode compartment.

13. An electrolyzer comprising a plurality of the electrolysis cells of claim 1 stacked in a bipolar arrangement.

14. The electrolyzer of claim 13 wherein the anode current carriers in the electrolysis cells are pan shaped and comprise a set of formed features, the cathode current carriers in the electrolysis cells are pan shaped and comprise a set of formed features, and the set of features in the anode current carriers nests with the set of features in adjacent cathode current carriers in the bipolar arrangement.

15. The electrolyzer of claim 13 wherein the electrolysis cells are stacked such that the anodes and cathodes in the cells are oriented at an angle greater than zero with the vertical.

16. The electrolyzer of claim 15 wherein the electrolysis cells are stacked such that the anodes and cathodes in the cells are oriented perpendicular to the vertical.

17. The electrolyzer of claim 13 wherein the electrolysis cells are modules and the electrolyzer is modular.

18. A method for the undivided electrolysis of a liquor comprising:
providing the electrolysis cell of claim 1;
directing the liquor to the liquor inlet in the inlet compartment and into the inlet compartment;
directing the liquor in a direction through the porous anode, through the electrically insulating separation, and through the porous cathode;
directing the liquor into the outlet compartment;
applying an electrolysis voltage and current across the anode and cathode current carriers during the directing of the liquor; and
directing the liquor and gas product out from the liquor outlet in the outlet compartment.

19. The method of claim 18 comprising recirculating the liquor from the liquor outlet in the outlet compartment to the liquor inlet in the inlet compartment.

20. The method of claim 18 for the production of sodium chlorate wherein the liquor comprises NaCI and water, and wherein the gas product is hydrogen.

## Patentansprüche

1. Ungeteilte Elektrolysezelle zum Elektrolysieren einer Lauge, mit:
einer porösen Anode, die für die Lauge durchlässig ist;
einer porösen Kathode, die für die Lauge durchlässig ist;
einer elektrisch isolierenden Abtrennung zwischen der Anode und der Kathode, die für die Lauge und für die Produkte der elektrolysierten Lauge durchlässig ist;
einem Anodenraum, dessen Oberfläche die poröse Anode und einen mit der porösen Anode elektrisch verbundenen Anodenstromträger umfasst;
einem Kathodenraum, dessen Oberfläche die poröse Kathode und einen mit der porösen Kathode elektrisch verbundenen Kathodenstromträger umfasst;
einem Laugeneinlass am Boden der Elektrolysezelle in einem Eintrittsraum, wobei der Eintrittsraum der Anodenraum oder der Kathodenraum ist; und
einem Laugen- und Gasproduktauslass am Kopfteil der Elektrolysezelle in einem Austrittsraum, wobei der Austrittsraum derjenige des Anodenraums und des Kathodenraums ist, der nicht der Eintrittsraum ist.

2. Elektrolysezelle nach Anspruch 1, wobei der Eintrittsraum der Anodenraum ist und der Austrittsraum der Kathodenraum ist
und/oder wobei die Elektrolysezelle eine Chloratelektrolysezelle ist und die Lauge NaCI und Wasser umfasst.

3. Elektrolysezelle nach Anspruch 1, wobei die poröse Anode aus Streckmetall oder Kiemenblech, vorzugsweise Titan hergestellt ist.

4. Elektrolysezelle nach Anspruch 1, wobei die poröse Kathode aus Streckmetall oder Kiemenblech, vorzugsweise einem nickelfreien Edel- oder Weichstahl hergestellt ist.

5. Elektrolysezelle nach Anspruch 1, wobei die elektrisch isolierende Abtrennung aus der Gruppe bestehend aus Polymerkörnern, einem Zwischenraum und einer porösen Polymerfolienbahn ausgewählt ist, wobei die letztere vorzugsweise eine poröse Fluorpolymerfolienbahn umfasst.

6. Elektrolysezelle nach Anspruch 1, wobei der Abstand zwischen der Anode und der Kathode weniger als etwa 2 mm beträgt.

7. Elektrolysezelle nach Anspruch 1, wobei der Strömungswiderstand der Abtrennung und/oder der Kathode höher als der Strömungswiderstand der Anode ist.

8. Elektrolysezelle nach Anspruch 1, wobei der Anodenstromträger wannenförmig ist und einen Satz geformter Merkmale aufweist,
und/oder wobei der Kathodenstromträger wannenförmig ist und einen Satz geformter Merkmale aufweist.

9. Elektrolysezelle nach Anspruch 1, wobei die poröse Anode mit dem Anodenstromträger durch einen Satz elektrisch leitender Finger elektrisch verbunden ist,
und/oder wobei die poröse Kathode mit dem Kathodenstromträger durch einen Satz elektrisch leitender Finger elektrisch verbunden ist.

10. Elektrolysezelle nach Anspruch 1, wobei der Kathodenraum Merkmale zum Leiten eines Gasprodukts nach oben zum Gasproduktauslass hin umfasst.

11. Elektrolysezelle nach Anspruch 1, die keinen anderen Einlass in entweder dem Anodenraum oder dem Kathodenraum und keinen Auslass in dem Anodenraum umfasst.

12. Elektrolysezelle nach Anspruch 1, die eine Entlüftungsöffnung in dem Anodenraum umfasst,
und/oder einen Abfluss in dem Kathodenraum umfasst.

13. Elektrolyseur, der mehrere der Elektrolysezellen nach Anspruch 1 umfasst, die in einer bipolaren Anordnung gestapelt sind.

14. Elektrolyseur nach Anspruch 13, wobei die Anodenstromträger in den Elektrolysezellen wannenförmig sind und einen Satz geformter Merkmale aufweisen, die Kathodenstromträger in den Elektrolysezellen wannenförmig sind und einen Satz geformter Merkmale aufweisen und der Satz von Merkmalen in den Anodenstromträgern in den Satz von Merkmalen in benachbarten Kathodenstromträgern in der bipolaren Anordnung geschachtelt ist.

15. Elektrolyseur nach Anspruch 13, wobei die Elektrolysezellen derart gestapelt sind, dass die Anoden und die Kathoden in den Zellen in einem Winkel ausgerichtet sind, der zur Vertikalen größer als null ist.

16. Elektrolyseur nach Anspruch 15, wobei die Elektrolysezellen derart gestapelt sind, dass die Anoden und die Kathoden in den Zellen rechtwinklig zu der Vertikalen ausgerichtet sind.

17. Elektrolyseur nach Anspruch 13, wobei die Elektrolysezellen Module sind und der Elektrolyseur modular ist.

18. Verfahren zur ungeteilten Elektrolyse einer Lauge, umfassend:
Bereitstellen der Elektrolysezelle nach Anspruch 1;
Leiten der Lauge zu dem Laugeneinlass in dem Eintrittsraum und in den Eintrittsraum;
Leiten der Lauge in einer Richtung durch die poröse Anode, durch die elektrisch isolierende Abtrennung und durch die poröse Kathode;
Leiten der Lauge in den Austrittsraum;
Anlegen einer Elektrolysespannung und eines Elektrolysestroms über die Anoden- und die Kathodenstromträger während des Leitens der Lauge, und
Leiten der Lauge und des Gasprodukts aus dem Laugenauslass in den Austrittsraum.

19. Verfahren nach Anspruch 18, welches das Rezirkulieren der Lauge aus dem Laugenauslass in dem Austrittsraum zu dem Laugeneinlass in dem Eintrittsraum umfasst.

20. Verfahren nach Anspruch 18 zur Produktion von Natriumchlorat, wobei die Lauge NaCI und Wasser umfasst und wobei das Gasprodukt Wasserstoff ist.

## Revendications

1. Cellule d'électrolyse non divisée pour l'électrolyse d'une liqueur comprenant :
une anode poreuse perméable à la liqueur ;
une cathode poreuse perméable à la liqueur ;
une séparation électriquement isolante entre l'anode et la cathode et perméable à la liqueur et aux produits de la liqueur électrolysée ;
un compartiment anodique dont la surface comprend l'anode poreuse et un porteur de courant anodique relié électriquement à l'anode poreuse ;
un compartiment cathodique dont la surface comprend la cathode poreuse et un porteur de courant cathodique relié électriquement à la cathode poreuse ;
une entrée de liqueur au fond de la cellule d'électrolyse dans un compartiment d'entrée dans lequel le compartiment d'entrée est l'un du compartiment anodique et du compartiment cathodique ; et
une sortie de liqueur et de produit gazeux au sommet de la cellule d'électrolyse dans un compartiment de sortie dans lequel le compartiment de sortie est celui du compartiment anodique et du compartiment cathodique autre que le compartiment d'entrée.

2. Cellule d'électrolyse selon la revendication 1, dans laquelle le compartiment d'entrée est le compartiment anodique et le compartiment de sortie est le compartiment cathodique,
et/ou dans laquelle la cellule d'électrolyse est une cellule d'électrolyse de chlorate et la liqueur comprend du NaCl et de l'eau.

3. Cellule d'électrolyse selon la revendication 1, dans laquelle l'anode poreuse est constituée de métal expansé ou de métal à lames, de préférence de titane.

4. Cellule d'électrolyse selon la revendication 1, dans laquelle la cathode poreuse est constituée de métal expansé ou de métal à lames, de préférence d'acier inoxydable ou d'acier doux dépourvu de nickel.

5. Cellule d'électrolyse selon la revendication 1, dans laquelle la séparation électriquement isolante est choisie dans le groupe constitué par des boutons de polymère, un espace et une feuille de polymère poreuse, cette dernière comprenant de préférence une feuille de polymère fluoré poreuse.

6. Cellule d'électrolyse selon la revendication 1, dans laquelle la distance entre l'anode et la cathode est inférieure à environ 2 mm.

7. Cellule d'électrolyse selon la revendication 1, dans laquelle la résistance à l'écoulement d'au moins un élément parmi la séparation et la cathode est supérieure à la résistance à l'écoulement de l'anode.

8. Cellule d'électrolyse selon la revendication 1, dans laquelle le porteur de courant anodique est en forme de cuvette et comprend un ensemble de caractéristiques formées,
et/ou dans laquelle le porteur de courant cathodique est en forme de cuvette et comprend un ensemble de caractéristiques formées.

9. Cellule d'électrolyse selon la revendication 1, dans laquelle l'anode poreuse est reliée électriquement au porteur de courant anodique par un ensemble de doigts électriquement conducteurs,
et/ou dans laquelle la cathode poreuse est reliée électriquement au porteur de courant cathodique par un ensemble de doigts électriquement conducteurs.

10. Cellule d'électrolyse selon la revendication 1, dans laquelle le compartiment cathodique comprend des caractéristiques pour diriger le produit gazeux vers le haut en direction de la sortie de produit gazeux.

11. Cellule d'électrolyse selon la revendication 1, ne comprenant pas d'autre entrée dans les compartiments anodique ou cathodique et aucune sortie dans le compartiment anodique.

12. Cellule d'électrolyse selon la revendication 1, comprenant un évent dans le compartiment anodique,
et/ou comprenant un drain dans le compartiment cathodique.

13. Électrolyseur comprenant une pluralité des cellules d'électrolyse selon la revendication 1 empilées en un agencement bipolaire.

14. Électrolyseur selon la revendication 13, dans lequel les porteurs de courant anodique dans les cellules d'électrolyse sont en forme de cuvette et comprennent un ensemble de caractéristiques formées, les porteurs de courant cathodique dans les cellules d'électrolyse sont en forme de cuvette et comprennent un ensemble de caractéristiques formées, et l'ensemble de caractéristiques dans les porteurs de courant anodique est imbriqué avec l'ensemble de caractéristiques dans les porteurs de courant cathodique adjacents dans l'agencement bipolaire.

15. Électrolyseur selon la revendication 13, dans lequel les cellules d'électrolyse sont empilées de sorte que les anodes et les cathodes dans les cellules sont orientées selon un angle supérieur à zéro avec la verticale.

16. Électrolyseur selon la revendication 15, dans lequel les cellules d'électrolyse sont empilées de sorte que les anodes et les cathodes dans les cellules sont orientées perpendiculairement à la verticale.

17. Électrolyseur selon la revendication 13, dans lequel les cellules d'électrolyse sont des modules et l'électrolyseur est modulaire.

18. Procédé pour l'électrolyse non divisée d'une liqueur comprenant :
fournir la cellule d'électrolyse selon la revendication 1 ;
diriger la liqueur vers l'entrée de liqueur dans le compartiment d'entrée et à l'intérieur du compartiment d'entrée ;
diriger la liqueur dans une direction à travers l'anode poreuse, à travers la séparation électriquement isolante, et à travers la cathode poreuse ;
diriger la liqueur à l'intérieur du compartiment de sortie ;
appliquer une tension et un courant d'électrolyse aux bornes des porteurs de courant anodique et cathodique pendant que la liqueur est dirigée ; et
diriger la liqueur et le produit gazeux hors de la sortie de liqueur dans le compartiment de sortie.

19. Procédé selon la revendication 18, comprenant la recirculation de la liqueur à partir de la sortie de liqueur dans le compartiment de sortie vers l'entrée de liqueur dans le compartiment d'entrée.

20. Procédé selon la revendication 18 pour la production de chlorate de sodium dans lequel la liqueur comprend du NaCI et de l'eau, et dans lequel le produit gazeux est de l'hydrogène.
